# EUROPEAN PATENT APPLICATION

(11) **EP 4 520 806 A1**
(43) Date of publication of application: **12.03.2025**
(21) Application number: 23196330.7
(22) Date of filing: 08.09.2023
(51) Int. Cl.: C10L 5/44, C10L 9/08

(54) **MICROWAVE BIOMASS TORREFACTION**

(71) Applicant: Agernomics Biotech Research Pte Ltd., Midview City 573969 (SG)
(72) Inventor: WU, Hsien Eddie, Pateros, 98846 (US)
(74) Representative: V.O.

(57) **Abstract**

The invention is in the field of biomass processing. In particular, the present invention is directed to a method and system for torrefaction of biomass, and to bio-coal and/or bio-char obtainable by such torrefaction.

There is provided a process for the production of bio-coal and/or bio-char, comprising a torrefaction step in which biomass is irradiated in a heating chamber using microwave radiation, wherein biomass is continuously fed to the heating chamber and torrefied biomass is continuously removed from the heating chamber.

## Description

### BACKGROUND OF THE INVENTION

The invention is in the field of biomass processing. In particular, the present invention is directed to a method and system for torrefaction of biomass, and to bio-coal and/or bio-char obtainable by such torrefaction.

A large part of the energy production worldwide is supplied by fossil fuels. However, in view of depleting fossil fuel sources and climate change due to greenhouse gases such as CO₂ that are emitted into the atmosphere upon combustion of fossil fuels, alternatives to fossil fuels are needed. Efforts are being made to switch to sustainable energy sources, such as solar-, hydro-, and wind energy. However, downsides of some sustainable energy sources, most notably wind- and solar energy, is that the energy production is very dependent on weather conditions. In case of electricity production for instance, this can make it difficult to produce a steady supply of electricity.

Carbon dioxide emission from the combustion of fossil fuels comes from carbon that was stored in the fossil fuels millions of years ago. Instead of burning fossil fuels, it is also possible to burn biomass. The advantage of burning biomass is that the CO₂ that is emitted has been extracted from the atmosphere by the biomass crop in recent years. This means that the net amount of CO₂ being emitted in the earth's atmosphere upon combustion of biomass is much lower compared to fossil fuels.

However, high moisture content and low power density of fresh biomass can make it difficult to handle and inefficient to transport, as well as difficult to combust for generating energy. Therefore, instead of using fresh biomass for combustion, biomass is often processed into biofuels, such as ethanol, biodiesel or bio-coal.

It is convenient if such biofuels are similar to existing fossil fuels, such as crude oil fractions or coal, in order to be able to use the biofuels in existing infrastructure, such as power plants. If the properties and combustion characteristics of biofuels are similar enough to existing fossil fuels, biomass can for instance be used to replace fossil fuels partly or completely in existing equipment for power generation. If biofuels are used to partly replace fossil fuels, they are often referred to as a drop-in fuel.

Generally, biomass can be converted into coal through a process called torrefaction. Torrefaction is a thermal treatment process that involves heating the biomass in the absence of oxygen, typically to temperatures of 250 °C and higher. This process causes the biomass to lose moisture and volatile compounds, resulting in a product with a higher energy density and lower moisture content than the raw biomass. Torrefaction typically requires keeping the biomass at the elevated temperatures for 30 minutes or more. During torrefaction, large amounts of energy are typically needed to heat batches of biomass in a vessel, and it takes a long time before the biomass is uniformly heated. Because of that, torrefaction of biomass is very energy intensive, which lowers the net energy yield of the biomass crop.

Other methods to heat biomass are described for instance in Kosowska-Golachowska et al., E3S Web of Conferences 154, 02008 (2020) and Ren et al., Energy Fuels 26, 5936-5943 (2012), but these experimental setups are not suitable for industrial scale production of bio-coal.

An object of the invention is to provide a biomass torrefaction process that is faster, more convenient, and/or less energy intensive than existing processes. Another object of the invention is to provide a torrefaction process that can be performed continuously. Another object of the invention is to provide bio-coal that has similar or better properties than existing fossil coal, and/or that can be used to partly or completely replace coal in existing equipment that runs on coal as a fuel. Another object of the invention is to provide bio-char.

### BRIEF SUMMARY OF THE INVENTION

The inventors have found that bio-coal and/or bio-char can be produced in an energy efficient and convenient way by torrefaction of biomass using microwave radiation in a continuous way. Therefore, in accordance with a first aspect of the invention there is provided a process for the production of bio-coal and/or bio-char comprising a torrefaction step in which biomass is irradiated in a heating chamber using microwave radiation, wherein biomass is continuously fed to the heating chamber and torrefied biomass is continuously removed from the heating chamber.

According to a second aspect of the invention there is provided system for torrefaction of biomass, comprising: - a heating chamber, the heating chamber comprising an inlet and an outlet for continuously feeding biomass to and removing torrefied biomass from the heating chamber and an exhaust through which volatiles that are generated in the torrefaction process can exit, and - a single- or multiple-frequency microwave generator configured to irradiate the internal volume of the heating chamber.

According to a third aspect of the invention there is also provided bio-coal and/or bio-char obtainable by the process as described herein.

By performing torrefaction using the method and system according to the invention, less energy is needed to produce bio-coal and/or bio-char from biomass. Advantageously, by using microwave radiation, the biomass can be heated very specifically and uniformly, meaning that there is less need to heat up the surroundings of the biomass, such as the surrounding atmosphere and the heating chamber in which the biomass is heated. Therefore, there is less waste of energy. Additionally, the microwave torrefaction process has a fast response time to heating and cooling. Because of that, the properties of the bio-coal and/or bio-char can be controlled very precisely. Furthermore, by combining microwave heating with continuous operation, the advantages of microwave heating, e.g. fast and targeted heating of the biomass, are used for efficient production of bio-coal and/or bio-char with high throughput.

### BRIEF DESCRIPTION OF THE DRAWINGS

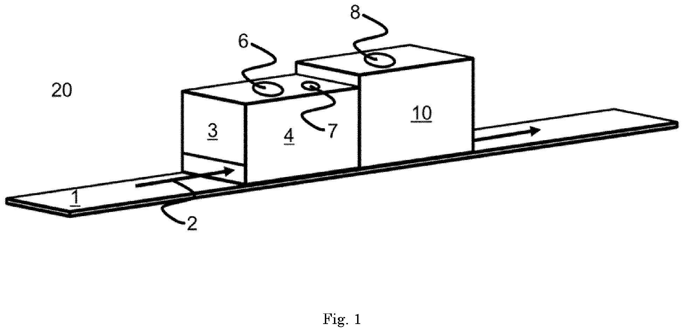

Figure 1 is a schematic representation of a system for torrefaction of biomass.

### DETAILED DESCRIPTION OF THE INVENTION

In accordance with a first aspect of the invention there is provided a process for the production of bio-coal and/or bio-char, comprising a torrefaction step in which biomass is irradiated in a heating chamber using microwave radiation, wherein biomass is continuously fed to the heating chamber and torrefied biomass is continuously removed from the heating chamber.

Bio-coal, as used herein, refers to carbonaceous material with similar properties as fossil coal, obtained from biomass. Preferably, the bio-coal has a carbon content of 35-55 wt.%, a C/H weight ratio of 5-10, a moisture content of 15 wt.% or less and more than 2 wt.%, such as 4-8 wt.% and/or a calorific value of 19.5-23.0 MJ/kg, depending on residence time in the heating chamber and the applied temperature.

The bio-coal preferably has a higher carbon content, C/H ratio, calorific value, and/or a lower moisture content than the biomass that it is derived from, and can for instance be used as a substitute for coal in power generation and other industrial applications. Due to the lower moisture content, bio-coal is also easier to handle, store and transport than fresh biomass. In addition, savings in the energy required to run pulverizing mills in coal power stations can be significant. For example: it takes about 45 kWh to pulverize one metric ton of fresh biomass, but only about 11 kWh to pulverize one metric ton of bio-coal pellets, meaning that using bio-coal instead of fresh biomass is advantageous.

Bio-coal can be distinguished from biochar, which typically has moisture content of less than 2 wt.%, carbon content of up to 80 wt.% and/or a C/H weight ratio of up to 40. Bio-char may also be produced using the process of the invention. Bio-char may in some cases be less suitable as a fuel than bio-coal, but it can advantageously be used as a fuel for special applications, such as for preparing food on a charcoal grill. Bio-char may be especially suitable for *Yakiniku,* also known as Japanese barbecue.

Other applications for which bio-char can advantageously be used include:
- rehabilitating soil in the agricultural industry, e.g. by extracting heavy metals and pollutants from the soil;
- permanent sequestration of carbon;
- increasing concrete strength by blending bio-char with cement, leading to a reduction of the size of air bubbles in concrete and therefore to concrete with higher density. An added benefit is that carbon is stored, *i.e.,* sequestered, in the concrete permanently;
- filtering applications in waste water treatment plants (WWTP) and city drinking water systems; and/or
- as carbon source for the production of high-value carbon-based materials.

The exact properties and quality of bio-coal and/or bio-char produced from biomass will depend on the conditions of the torrefaction process. Factors such as temperature, residence time, and the type of heating chamber used affect the energy density and moisture content of the final product.

The heating chamber may have different kinds of shapes. In embodiments, the heating chamber is tubular. Using a tubular heating chamber, more uniform radiation levels throughout the heating chamber can be achieved.

Preferably, the biomass comprises napier grass. Napier grass (*Pennisetum purpureum*) is a fast-growing, perennial grass that is native to tropical and subtropical regions of Asia and Africa. Napier grass is suitable as a source for biofuels because of its high productivity, low input requirements, and ability to grow in a variety of soils and climates.

Napier grass can reach up to 6 meters in height and can reach biomass yields of up to up to 500 metric tons per hectare per year. Raw cut napier grass has a high energy content, with a calorific values of 15-20 MJ/kg. Napier grass can also be grown on marginal land, such as degraded pastures or abandoned agricultural land, which makes it an attractive option for bioenergy production because in that way, it does not compete with food production. Additionally, it is relatively pest and disease-resistant, and can be harvested multiple times per year, further increasing its yield potential.

In embodiments, the biomass used in the process according to the invention is dried biomass. By drying the biomass before the torrefaction step, the density of the biomass is higher compared to wet biomass, meaning that the process can run at higher throughput.

By using microwave radiation, the biomass can be targeted very specifically, meaning that there is less need to heat up the surroundings of the biomass, such as the surrounding atmosphere and the heating chamber in which the biomass is heated. Therefore, there is less waste of energy, and the microwave torrefaction can proceed quicker than conventional torrefaction processes. In embodiments, the duration of microwave irradiation is 30 minutes or less, preferably 20 minutes or less, such as 10 minutes or less. In contrast to conventional torrefaction processes, these short times can be sufficient to produce bio-coal and/or bio-char with the desired properties.

Biomass is supplied to the heating chamber and torrefied biomass is removed from the heating continuously. This is possible because of the efficient heating with microwave radiation. In conventional torrefaction processes, due to the slow heating and cooling of the biomass, continuous operation is much more challenging.

In embodiments, the microwave heating is performed using a single-frequency microwave source. Alternatively, or additionally, the microwave heating is performed using a multiple-frequency microwave source. Using a multiple-frequency microwave source, the biomass can be heated more efficiently and/or evenly.

In embodiments, a single microwave source is used to heat the biomass. In other embodiments, more than one microwave radiation source are used. The sources can be positioned at different positions along the heating chamber and/or at different angles, in order to increase the uniformity of microwaves radiation throughout the heating chamber and/or in order to increase throughput of the process or system.

Preferably, the reflection of microwaves is reduced by impedance matching of the source and the biomass. In this way, energy efficiency of the process can be improved.

Whereas in conventional torrefaction processes large amounts of energy are wasted by heating up the equipment and surroundings of the biomass, the process according to the first aspect of the invention is more efficient because heating is more targeted toward the biomass instead of to the surroundings, thereby increasing the net calorific value of the bio-coal and/or bio-char.

The biomass is preferably heated to a temperature in the range of 150-350 °C, more preferably 200-300 °C. Because the biomass is targeted by the microwave heating, the temperature in the heating chamber surrounding the biomass may be lower than that, leading to less energy loss.

In order to prevent combustion of the biomass, the atmosphere in the heating chamber is preferably kept under pyrolytic conditions, meaning that the amount of oxygen in the heating chamber is kept low. Preferably, the ambient amount of oxygen in the heating chamber is 1000 ppm by weight or less, preferably 200 ppm or less, more preferably 50 ppm or less or even 10 ppm or less.

The pyrolytic conditions and/or the low amounts of oxygen can be achieved by purging the heating chamber using a gas that is inert toward the biomass, such as nitrogen or argon.

The biomass may be provided in the form of pellets and/or chips, having dimensions in the range of 1-100 mm, preferably 5-50 mm, because this particle size is particularly suitable for microwave torrefaction. Alternatively or additionally, the dimensions of the biomass pellets and/or chips may be chosen based on the wavelength of the microwave radiation used, such that a blocking unit as described below for the system can be used to prevent leakage of microwave radiation out of the heating chamber while allowing the pellets and/or chips to enter the heating chamber.

In embodiments, the process according to the first aspect of the invention is followed by a step of compacting the torrefied biomass into pellets, preferably using a compacting pressure of 20-150 MPa, such as 70-100 MPa. The resulting pellets have properties that make them suitable for being used as a substitute for fossil coal.

Preferably, the pellets have a calorific value of 4000 kcal/kg or more, preferably 5000 kcal/kg or more, such as 4800-5500 kcal/kg.

Preferably, the pellets have a Hardgrove grindability index (HGI) of 40-70, preferably 40-60, such as 45-55. In contrast, bituminous coal typically have a HGI of around 20- 40, meaning that bituminous coal is harder and more difficult to grind than pellets according to the invention.

According to a second aspect of the invention there is provided a system for torrefaction of biomass comprising: - a heating chamber, the heating chamber comprising an inlet and an outlet for continuously feeding biomass to and removing torrefied biomass from the heating chamber and an exhaust through which volatiles that are generated in the torrefaction process can exit, and - a single or multiple frequency microwave generator configured to irradiate the internal volume of the heating chamber.

The system is preferably suitable for carrying out the process for the production of bio-coal and/or bio-char as described herein.

Preferably, a cooling chamber is positioned downstream the outlet of the heating chamber, said cooling chamber having an inlet for introducing a cooling fluid to cool the torrefied biomass. For instance, gases that are inert to the torrefied biomass such as nitrogen can be used as cooling fluid.

By using microwave torrefaction instead of conventional torrefaction, there is less waste of energy, and the microwave torrefaction process has a fast response time to heating and cooling. Because of that, cooling can proceed quickly, and the degree of torrefaction can be controlled accurately.

The system may further comprise a compacting unit for compacting the torrefied biomass into pellets.

In embodiments, the heating chamber comprises one or more blocking units, configured to block leakage of microwave radiation used for heating the biomass. More specifically, taking into account the wavelength of the microwave radiation used, such a blocking unit may be placed near any opening of the heating chamber, controlling the dimensions of such an opening in such a way that biomass and/or purge gas can be introduced into the heating chamber and torrefied biomass and exhaust gas can be removed from the heating chamber, while blocking microwave radiation from leaking out of the heating chamber into the surrounding atmosphere.

According to a third aspect of the invention, there is provided a bio-coal and/or bio-char obtainable by a process according to the first aspect of the invention.

Figure 1 is a schematic representation of a system for torrefaction of biomass. In system (20) for torrefaction of biomass, biomass is introduced (2) in heating chamber (4) in a continuous way, for instance using conveyor (1). Heating chamber (4) can comprise exhaust (7) through which volatiles that are generated in the torrefaction process can exit. Microwave energy source (6) is used to irradiate the biomass in the heating chamber with microwave radiation. Blocking unit (3) serves to block leakage of microwave radiation to the exterior of the heating chamber, making sure that the generated microwave radiation is used as effectively as possible. After exiting heating chamber (4), the biomass may enter cooling chamber (10), in which cooling fluid can be introduced through cooling fluid inlet (8).

## Claims

1. Process for the production of bio-coal and/or bio-char, comprising a torrefaction step in which biomass is irradiated in a heating chamber using microwave radiation, wherein biomass is continuously fed to the heating chamber and torrefied biomass is continuously removed from the heating chamber.

2. Process according to claim 1, wherein the biomass comprises herbaceous biomass, preferably napier grass, and/or wherein the biomass is dried biomass.

3. Process according claim 1 or 2, wherein the step of irradiating biomass with microwave radiation is performed for 30 minutes or less, preferably 20 minutes or less, more preferably 10 minutes or less.

4. Process according to any one of claims 1-3, wherein the microwave heating if performed using a single-frequency microwave source.

5. Process according to any one of claims 1-3, wherein the microwave heating if performed using a multi-frequency microwave source.

6. Process according to any one of claims 1-5, wherein the microwave source and the biomass are impedance matched, thereby reducing the reflection of microwaves.

7. Process according to any one of claims 1-6, wherein the biomass is heated to a temperature in the range of 150-350 °C, preferably 200-300 °C.

8. Process according to any one of claims 1-7, wherein the amount of oxygen in the heating chamber is 1000 ppm or less, preferably 200 ppm or less.

9. Process according to any one of claims 1-8, followed by a step of compacting the torrefied biomass into pellets, preferably using a compacting pressure of 20-150 MPa, preferably 70-100 MPa.

10. Process according to claim 9, wherein the resulting pellets have a calorific value of 4000 kcal/kg or more, preferably 5000 kcal/kg or more, such as 4800-5500 kcal/kg.

11. Process according to claim 9 or 10, wherein the pellets have a Hardgrove grindability index of 40-70, preferably 40-60, such as 45-55.

12. System for torrefaction of biomass comprising:
- a heating chamber, the heating chamber comprising an inlet and an outlet for continuously feeding biomass to and removing torrefied biomass from the heating chamber and an exhaust through which volatiles that are generated in the torrefaction process can exit, and
- a single- or multiple-frequency microwave generator configured to irradiate the internal volume of the heating chamber.

13. System according to claim 12, further comprising a cooling chamber positioned downstream the outlet of the heating chamber, said cooling chamber having an inlet for introducing a cooling fluid to cool the torrefied biomass.

14. System according to claim 12 or 13, wherein the heating chamber comprises one or more blocking units configured to prevent leakage of microwave radiation out of the heating chamber.

15. Bio-coal and/or bio-char obtainable by a process according to any one of claims 1-11.
